# EUROPEAN PATENT SPECIFICATION

(11) **EP 4 113 937 B1**
(45) Date of publication and mention of the grant of the patent: **29.07.2026**
(21) Application number: 21777165.8
(22) Date of filing: 01.03.2021
(51) Int. Cl.: H04L 45/76, H04L 45/74, H04L 12/46, H04L 45/00, H04L 45/586, H04L 101/622, H04L 61/5038

(54) **MAC ADDRESS SENDING METHOD AND APPARATUS, SYSTEM**
MAC-ADRESSENSENDEVERFAHREN UND -VORRICHTUNG, SYSTEM
PROCÉDÉ ET APPAREIL D'ENVOI D'ADRESSE MAC, SYSTÈME

(30) Priority: 23.03.2020 CN 202010209165
(43) Date of publication of application: 04.01.2023
(73) Proprietor: Huawei Technologies Co., Ltd., Shenzhen, Guangdong 518129, (CN)
(72) Inventor: ZHU, Wenhui, Shenzhen, Guangdong 518129 (CN)
(74) Representative: Epping - Hermann - Fischer
(86) International application number: PCT/CN2021/078547
(87) International publication number: WO 2021/190251

(56) References cited:
- EP-A1- 3 544 240
- CN-A- 104 065 554
- CN-A- 108 075 956
- CN-A- 108 270 878
- US-B2- 10 567 347
- SAJASSI A ET AL: "BGP MPLS-Based Ethernet VPN; rfc7432.txt", BGP MPLS-BASED ETHERNET VPN; RFC7432.TXT, INTERNET ENGINEERING TASK FORCE, IETF; STANDARD, INTERNET SOCIETY (ISOC) 4, RUE DES FALAISES CH- 1205 GENEVA, SWITZERLAND, 18 February 2015 (2015-02-18), pages 1 - 56, XP015104549

## Description

Embodiments of this application claim priority to Chinese Patent Application No. 202010209165.5, filed on March 23, 2020 and entitled "MAC ADDRESS SENDING METHOD, APPARATUS, AND SYSTEM".

### TECHNICAL FIELD

Embodiments of this application relate to the field of communication technologies, and in particular, to a media access control (Media Access Control, MAC) address sending method, a MAC sending apparatus, a MAC address receiving and sending system, and a related computer program product.

### BACKGROUND

An Ethernet virtual private network (Ethernet Virtual Private Network, EVPN) is a virtual private network (Virtual Private Network, VPN) technology for layer-2 network interconnection. As a mainstream solution for carrying layer-2 services, the EVPN is widely used in network designs of various operators. An EVPN-based virtual extensible local area network (virtual extensible local area network, VXLAN) includes a plurality of provider edge (Provider Edge, PE) devices communicating with each other. A host may be connected to the PE device in the VXLAN for access to the VXLAN.

The PE device may be connected to a plurality of hosts (which may be referred to as local hosts of the PE device), and a plurality of virtual machines (which may be referred to as local virtual machines of the PE device) may be created on each of the plurality of hosts. The plurality of virtual machines on each of the hosts may belong to a same virtual local area network (virtual local area network, VLAN) or different VLANs.

The PE device may obtain a MAC address of the local virtual machine of the PE device. Each time the PE device obtains a MAC address of a virtual machine, the PE device may generate a media access control/internet protocol advertisement (Media Access Control/Internet Protocol Advertisement, MAC/IP Advertisement) route for advertising the MAC address of the virtual machine, and send the MAC/IP advertisement route to other PE devices. The MAC/IP Advertisement route includes the MAC address of the virtual machine and a VXLAN network identifier (VXLAN network identifier, VNI) of the virtual machine.

EP 3544240 A1 discloses a data processing method and a corresponding data processing device. The method is applicable to a first edge device of a virtual extensible local area network, and comprises: receiving a target message, and determining a target network tag and a target destination address of the target message; determining a target outbound interface corresponding to the target message based on a result of matching the target network tag and the target destination address with a locally stored correspondence relationship of a network tag, a destination address and an outbound interface; sending the target message through the target outbound interface. In an example of the present disclosure, a message is forwarded by matching a destination address and a network tag, avoiding forwarding a message as long as the destination address is hit and solving the problem that VMs with the same MAC address but belonging to different VLANs cannot gain access to one VXLAN.

IETF RFC 7432 describes procedures for a BGP MPLS-based solution called Ethernet VPN (EVPN) to address the requirements specified in RFC 7209. EVPN requires extensions to existing IP/MPLS protocols as therein. In addition to these extensions, EVPN uses several building blocks from existing MPLS technologies.

### SUMMARY

The invention is defined by the independent claims; the dependent claims define particular embodiments of the invention.

Embodiments of this application provide a MAC address sending method, a MAC sending apparatus, a MAC address receiving and sending system, and a related computer program product, to reduce, to some extent, a quantity of routes that need to be sent for advertising a MAC address of a virtual machine in a network. The invention is defined by the attached set of claims. Further details of the disclosed methods, devices and system are provided in the following, which are helpful for understanding the claimed invention.

According to a first aspect, a MAC address sending method is provided, and is applied to a network system. The network system includes a first network device and a second network device, the first network device is connected to a plurality of virtual machines, and the plurality of virtual machines include a first virtual machine and a second virtual machine.

The method may be performed by the first network device. Specifically, the first network device obtains a MAC address of the first virtual machine. The first network device obtains a first route when the first virtual machine and the second virtual machine have a same MAC address and are located in different virtual local area networks, where the first route includes route information, and the route information includes the MAC address, first virtual local area network information of the first virtual machine, and second virtual local area network information of the second virtual machine. The first network device sends the first route to the second network device.

According to the claimed invention, there are a plurality of virtual machines whose MAC addresses are the same as the MAC address of the first virtual machine, the plurality of virtual machines are located in virtual local area networks different from the virtual local area network in which the first virtual machine is located, and the virtual local area networks are also different from each other. The second virtual machine is one of the plurality of virtual machines. In the foregoing case, the route information in the first route includes the MAC address, the first virtual local area network information of the first virtual machine, and a plurality of pieces of virtual local area network information of the plurality of virtual machines, where the plurality of virtual machines one-to-one correspond to the plurality of pieces of virtual local area network information.

According to the claimed invention, for the plurality of virtual machines located in different virtual local area networks that have a same MAC address, one route is used for advertising the MAC address and virtual local area network information of each of the plurality of virtual machines, that is, the plurality of pieces of information of the plurality of virtual machines located in the different virtual local area networks that have the same MAC address is aggregated to one route. In this way, a quantity of routes in a network may be reduced, and route transmission performance and route convergence performance may be improved.

In a possible implementation, the first network device may store a second route (for example, a border gateway protocol (Border Gateway Protocol, BGP) route), where the second route includes the route information. In this way, for the plurality of virtual machines located in the different virtual local area networks that have the same MAC address, only one route needs to be locally stored, to record the same MAC address and the virtual local area network information of the plurality of virtual machines, where the route may include a plurality of route table entries respectively corresponding to the plurality of virtual machines. That is, for the plurality of virtual machines located in the different virtual local area networks that have the same MAC address, a plurality of pieces of information corresponding to the plurality of virtual machines are recorded in one route, to reduce a quantity of routes that need to be locally stored and save storage resources.

In a possible implementation, before the first network device obtains the first route, the first network device may send a third route to the second network device, where the third route includes the MAC address and the second virtual local area network information, but does not include the first virtual local area network information. For example, when one or more virtual machines go online, the first network device may obtain related attribute information of the one or more virtual machines, where the one or more virtual machines include the second virtual machine, but do not include the first virtual machine. In the foregoing case, the first network device may send the third route to the second network device, to advertise related information of the second virtual machine. When the first network device further finds that virtual machines that go online simultaneously (where "go online simultaneously" does not necessarily mean that the virtual machines go online at a same time point, and the virtual machines may go online sequentially at time points within a specific threshold range) further include virtual machines that have a same MAC address as that of the second virtual machine, the first network device may send, in the third route, related information of the plurality of virtual machines that have the same MAC address. After the first network device sends the third route, the first virtual machine goes online at a moment, and the first virtual machine and the second virtual machine have the same MAC address. In this case, the first network device may send the first route, to advertise related information of the first virtual machine. The first route may include the related information of the first virtual machine and the related information of the one or more virtual machines included in the foregoing third route. That is, the first route may be used as an updated route of the third route. The foregoing uses an example in which the third route is a route that is sent when a virtual machine goes online. It may be understood that the third route may alternatively be a route in an updating scenario. In this way, the second network device may continuously receive a latest route advertised by the first network device, where the route includes aggregated attribute information of virtual machines that are under the first network device and that have a same MAC address, to reduce a quantity of routes locally stored in the second network device.

For example, the first virtual local area network information may include a virtual private network tag. For example, if the first network device is located in an EVPN-based VXLAN, the virtual private network tag includes a VNI. Alternatively, if the first network device is located in a segment routing (Segment Routing, SR) network or an internet protocol version 6 segment routing (Internet Protocol Version 6 segment routing, SRv6) network, the virtual private network tag includes a segment identifier (segment identifier, SID). Alternatively, if the first network device is located in a multi-protocol label switching (Multi-protocol Label Switching, MPLS) network, the virtual private network tag includes an MPLS label.

For example, the first virtual local area network information may further include any one or more of a route target attribute, a virtual local area network tag, and a MAC mobility extended community attribute.

The first route may be a route for advertising a MAC address. For example, the first route may be a MAC/IP Advertisement route, and the MAC/IP Advertisement route may be carried in a BGP update (Update) packet. In the foregoing case, the route information including the MAC address, the first virtual local area network information, and the second virtual local area network information may exist in a part of fields in the MAC/IP Advertisement route. Alternatively, some information of the route information may directly exist in a part of fields in the BGP Update packet, and other information exists in the MAC/IP Advertisement route. In another case, the route information may alternatively exist in another type of route. The route and one or more other advertisement routes may be carried in a packet and sent together, or the route may be individually sent.

In a possible implementation, an attribute value of the MAC mobility extended community (MAC Mobility Extended Community, MMEC) attribute included in the first virtual local area network information is a first attribute value. In this case, the first network device receives a fourth route, where the fourth route includes the MAC address and third virtual local area network information of the first virtual machine, and an attribute value of a MAC mobility extended community attribute that is of the first virtual machine and that is included in the third virtual local area network information is a second attribute value. When the first attribute value is less than the second attribute value, the first network device deletes the first virtual local area network information in the second route, and stores a fifth route, where the fifth route includes the MAC address and the third virtual local area network information.

When the first attribute value is less than the second attribute value, it indicates that the third virtual local area network information is updated virtual local area network information of the first virtual machine compared with the first virtual local area network information and is sent by another network device. In this case, it indicates that the first virtual machine migrates from the first network device to the another network device. Therefore, the first network device may update a locally stored route table entry corresponding to the first virtual machine, to be specific, the first network device may delete the first virtual local area network information stored in the second route. The first network device further generates, based on the received fourth route, the fifth route (for example, a BGP route), and stores the fifth route, where the fifth route includes the third virtual local area network information sent by the second network device. Therefore, by using the MMEC attribute, the first network device may detect migration of a local virtual machine in a timely manner, to improve accuracy of locally maintained route information and improve robustness of network operation.

According to a second aspect, a MAC address sending apparatus is provided. The MAC address sending apparatus has a function of implementing behavior in the MAC address sending method according to the first aspect. The MAC address sending apparatus includes at least one module, and the at least one module is configured to implement the MAC address sending method according to the first aspect.

According to a third aspect, a MAC address sending apparatus is provided. A structure of the MAC address sending apparatus includes a processor and a transceiver. The processor is configured to execute a program stored in a memory, to implement the MAC address sending method according to the first aspect. The transceiver is configured to send and receive various types of data in the first aspect. Optionally, the apparatus may further include the memory, configured to store the program that supports the MAC address sending apparatus in performing the MAC address sending method according to the first aspect. The MAC address sending apparatus may further include a communication bus, where the communication bus is configured to establish a connection between the processor and the transceiver.

According to a fourth aspect, a computer-readable storage medium is provided. The computer-readable storage medium stores instructions. When the instructions are run on a computer, the computer is enabled to perform the MAC address sending method according to the first aspect.

According to a fifth aspect, a computer program product including instructions is provided. When the computer program product runs on a computer, the computer is enabled to perform the MAC address sending method according to the first aspect.

According to a sixth aspect, a MAC address receiving method is provided, and is applied to a network system. The network system includes a first network device and a second network device, the first network device is connected to a plurality of virtual machines, and the plurality of virtual machines include a first virtual machine and a second virtual machine.

The method is performed by the second network device. Specifically, the second network device receives a first route sent by the first network device, where the first route includes first route information, the first route information includes a MAC address, first virtual local area network information, and second virtual local area network information, the MAC address is a MAC address of both the first virtual machine and the second virtual machine that are connected to the first network device, the first virtual local area network information is information about the first virtual machine, and the second virtual local area network information is information about the second virtual machine. The second network device stores the first route information.

In a possible case, there may be a plurality of virtual machines whose MAC addresses are the same as the MAC address of the first virtual machine, the plurality of virtual machines are located in virtual local area networks different from a virtual local area network in which the first virtual machine is located, and the virtual local area networks are also different from each other. The second virtual machine is one of the plurality of virtual machines. In the foregoing case, the route information in the first route includes the MAC address, the first virtual local area network information of the first virtual machine, and a plurality of pieces of virtual local area network information of the plurality of virtual machines, where the plurality of virtual machines one-to-one correspond to the plurality of pieces of virtual local area network information.

According to the claimed invention, for a plurality of virtual machines located in different virtual local area networks that have a same MAC address, one route is used for advertising the MAC address and virtual local area network information of each of the plurality of virtual machines, that is, the same MAC addresses that are in the different virtual local area networks is aggregated to one route. In this way, a quantity of routes in a network may be reduced, and route transmission performance and route convergence performance may be improved.

In a possible implementation, when storing the first route information, the second network device stores the first route information in a second route. In this way, for the plurality of virtual machines located in the different virtual local area networks that have the same MAC address, only one route needs to be stored, to record the MAC addresses of the plurality of virtual machines and the virtual local area network information of the plurality of virtual machines. That is, for the plurality of virtual machines located in the different virtual local area networks that have the same MAC address, a plurality of route table entries corresponding to the plurality of virtual machines may be recorded in one route, to reduce a quantity of routes that need to be locally stored.

In a possible implementation, before receiving the first route, the second network device receives a third route sent by the first network device, where the third route includes second route information, the second route information includes the MAC address and the second virtual local area network information, but does not include the first virtual local area network information. The second network device stores the second route information in the second route. That is, the second route locally stored by the second network device includes the virtual local area network information of the second virtual machine. In this case, because the first virtual machine may not go online under the first network device or the like, the third route sent by the first network device and received by the second network device does not include the information about the first virtual machine that has the same MAC address as that of the second virtual machine. Therefore, the second route locally stored by the second network device does not include the information about the first virtual machine either. After the second network device receives the third route and then receives the first route including attribute information of the first virtual machine, when storing, in the second route, the first route information included in the first route, the second network device may update the second route information in the second route as the first route information. The updating may be, for example, updating the complete second route information as the first route information, or may be partially updating data content that is in the second route information and that is different from that in the first route information.

In the foregoing case, that the third route includes the information about the second virtual machine and the first route includes the information about the first virtual machine and the information about the second virtual machine is used as an example. In an actual application scenario, the third route may further include information about one or more other virtual machines that have the same MAC address as that of the second virtual machine, and the third route may include a virtual machine that has the same MAC address as that of the first virtual machine, for example, the second virtual machine and/or the one or more other virtual machines, or may not include information about another virtual machine. That is, when the first network device sends the first route, the first route information included in the first route is information about a virtual machine that is actually mounted to the first network device and that has the same MAC address as that of the first virtual machine when that the first virtual machine goes online is found.

For example, the first virtual local area network information may include a virtual private network tag. For example, if the first network device is located in an EVPN-based VXLAN, the virtual private network tag includes a VNI. Alternatively, if the first network device is located in an SR network or an SRv6 network, the virtual private network tag includes an SID. Alternatively, if the first network device is located in an MPLS network, the virtual private network tag includes an MPLS label.

For example, the first virtual local area network information may further include any one or more of a route target attribute, a virtual local area network tag, and a MAC mobility extended community attribute.

The first route may be a route for advertising a MAC address. For example, the first route may be a MAC/IP Advertisement route, and the MAC/IP Advertisement route may be carried in a BGP Update packet. In the foregoing case, the route information including the MAC address, the first virtual local area network information, and the second virtual local area network information may exist in a part of fields in the MAC/IP Advertisement route. Alternatively, some information of the route information may directly exist in a part of fields in the BGP Update packet, and other information exists in the MAC/IP Advertisement route. In another case, the route information may alternatively exist in another type of route. The route and one or more other routes may be carried in a packet and sent together, or the route may be individually sent.

In a possible implementation, an attribute value of the MAC mobility extended community attribute that is of the first virtual machine and that is included in the first route information is a first attribute value. In this case, the second network device generates a fourth route (such as a MAC/IP Advertisement route) based on a connection between the first virtual machine and the second network device, and sends the fourth route to the first network device. The fourth route includes the MAC address and third virtual local area network information of the first virtual machine. An attribute value of a MAC mobility extended community attribute that is of the first virtual machine and that is included in the third virtual local area network information is a second attribute value, and the second attribute value is greater than the first attribute value. The second network device may further locally store a sixth route, where the sixth route includes the MAC address and the third virtual local area network information of the first virtual machine. The sixth route and the second route are two independently stored routes, where the second route is a route stored based on a MAC/IP Advertisement route received from the first network device, and the sixth route is a route generated or obtained by the second network device based on a virtual machine detected under the second network device.

When the first virtual machine is connected to the second network device, it indicates that the first virtual machine migrates from the first network device to the second network device. Therefore, the second network device may update the locally stored attribute value of the MMEC attribute of the first virtual machine, to be specific, may increase the attribute value of the MMEC attribute of the first virtual machine, in other words, the second attribute value is greater than the first attribute value. After the attribute value of the MMEC attribute of the first virtual machine is increased, the MAC address and the virtual local area network information of the first virtual machine may be re-advertised, that is, the fourth route may be sent to the first network device. In one case, in addition to updated virtual local area network information of the first virtual machine, information that is stored by the second network device and that is about another virtual machine having the same MAC address as that of the first virtual machine may be further included in the fourth route. In another case, for example, when another virtual machine migrates from the first network device to the second network device at the same time, or when another virtual machine newly goes online under the second network device, the fourth route may alternatively carry only updated virtual local area network information of the first virtual machine, or may alternatively carry updated virtual local area network information of the first virtual machine and other updated virtual local area network information having the same MAC address as that of the first virtual machine. In the another case, the first network device that receives the fourth route may update, based on the updated information carried in the received route, a route table entry in a locally stored route having a same MAC address, to improve route transmission efficiency and reduce a quantity of routes locally stored by a route receive end. In a possible implementation, after the second network device receives the first route, the second network device may further send the first route to a third network device. The second network device may be, for example, a route reflector. Because the first network device reduces a quantity of routes that need to be sent, accordingly, the second network device also reduces a quantity of routes that need to be reflected, thereby improving overall transmission efficiency of a network.

According to a seventh aspect, a MAC address sending apparatus is provided. The MAC address sending apparatus has a function of implementing behavior in the MAC address sending method according to the sixth aspect. The MAC address sending apparatus includes at least one module, and the at least one module is configured to implement the MAC address sending method according to the sixth aspect.

According to an eighth aspect, a MAC address sending apparatus is provided. A structure of the MAC address sending apparatus includes a processor and a transceiver. The processor is configured to execute a program stored in a memory, to implement the MAC address sending method according to the sixth aspect. The transceiver is configured to send and receive various types of data in the sixth aspect. Optionally, the apparatus may further include the memory, configured to store the program that supports the MAC address sending apparatus in performing the MAC address sending method according to the sixth aspect. The MAC address sending apparatus may further include a communication bus, where the communication bus is configured to establish a connection between the processor and the transceiver.

According to a ninth aspect, a computer-readable storage medium is provided. The computer-readable storage medium stores instructions. When the instructions are run on a computer, the computer is enabled to perform the MAC address sending method according to the sixth aspect.

According to a tenth aspect, a computer program product including instructions is provided. When the computer program product runs on a computer, the computer is enabled to perform the MAC address sending method according to the sixth aspect.

According to an eleventh aspect, a MAC address receiving and sending system is provided. The system includes a first network device and a second network device, the first network device is connected to a plurality of virtual machines, and the plurality of virtual machines include a first virtual machine and a second virtual machine.

The first network device is configured to: obtain a MAC address of the first virtual machine; obtain a first route when the first virtual machine and the second virtual machine have a same MAC address and are located in different virtual local area networks, where the first route includes first route information, and the first route information includes the MAC address, first virtual local area network information of the first virtual machine, and second virtual local area network information of the second virtual machine; and send the first route to the second network device.

The second network device is configured to: receive the first route sent by the first network device; and store the first route information in the first route.

In a possible implementation, the first network device is further configured to store a second route, where the second route includes the first route information.

In a possible implementation, the second network device is configured to store the first route information in a sixth route.

In a possible implementation, the first network device is further configured to send a third route to the second network device, where the third route includes second route information, and the second route information includes the MAC address and the second virtual local area network information, but does not include the first virtual local area network information. In this manner, the first network device is configured to update the third route, to obtain the first route.

The second network device is further configured to: receive the third route sent by the first network device; and add the second route information to the sixth route. In this manner, the second network device is configured to update the second route information in the sixth route as the first route information.

In a possible case, the first virtual local area network information includes a virtual private network tag. For example, if the first network device is located in an EVPN-based VXLAN, the virtual private network tag includes a VNI. Alternatively, if the first network device is located in an SR network or an SRv6 network, the virtual private network tag includes an SID. Alternatively, if the first network device is located in an MPLS network, the virtual private network tag includes an MPLS label.

In a possible case, the first virtual local area network information further includes any one or more of a route target attribute, a virtual local area network tag, and a MAC mobility extended community attribute.

In a possible case, the first route is a MAC/IP Advertisement route.

In a possible implementation, an attribute value of the MAC mobility extended community attribute included in the first virtual local area network information is a first attribute value.

The second network device is further configured to: generate a fourth route based on a connection between the first virtual machine and the second network device, where the fourth route includes the MAC address and third virtual local area network information of the first virtual machine, an attribute value of a MAC mobility extended community attribute that is of the first virtual machine and that is included in the third virtual local area network information is a second attribute value, and the second attribute value is greater than the first attribute value; and send the fourth route to the first network device.

The first network device is further configured to: receive the fourth route; when the first attribute value is less than the second attribute value, delete the first virtual local area network information in the second route; and store a fifth route, where the fifth route includes the MAC address and the third virtual local area network information.

In a possible implementation, the second network device is further configured to send the first route to a third network device.

Technical effects obtained in the second aspect, the third aspect, the fourth aspect, and the fifth aspect are similar to the technical effects obtained by using corresponding technical means in the first aspect. Details are not described herein again.

Technical effects obtained in the seventh aspect, the eighth aspect, the ninth aspect, and the tenth aspect are similar to the technical effects obtained by using corresponding technical means in the sixth aspect. Details are not described herein again.

Technical effects obtained in the eleventh aspect are similar to the technical effects obtained by using corresponding technical means in the first aspect and the sixth aspect. Details are not described herein again.

### BRIEF DESCRIPTION OF DRAWINGS

FIG. 1 is a schematic diagram of a network system according to an embodiment of this application;
FIG. 2 is a flowchart of a MAC address sending method according to an embodiment of this application;
FIG. 3 is a schematic diagram of another network system according to an embodiment of this application;
FIG. 4 is a schematic diagram of a structure of a network device according to an embodiment of this application;
FIG. 5 is a schematic diagram of a structure of a MAC address sending apparatus according to an embodiment of this application;
FIG. 6 is a schematic diagram of a structure of another MAC address sending apparatus according to an embodiment of this application; and
FIG. 7 is a schematic diagram of a MAC address receiving and sending system according to an embodiment of this application.

### DESCRIPTION OF EMBODIMENTS

To make objectives, technical solutions, and advantages of embodiments of this application clearer, the following further describes implementations of this application in detail with reference to the accompanying drawings.

Before embodiments of this application are described in detail, application scenarios in embodiments of this application are first described.

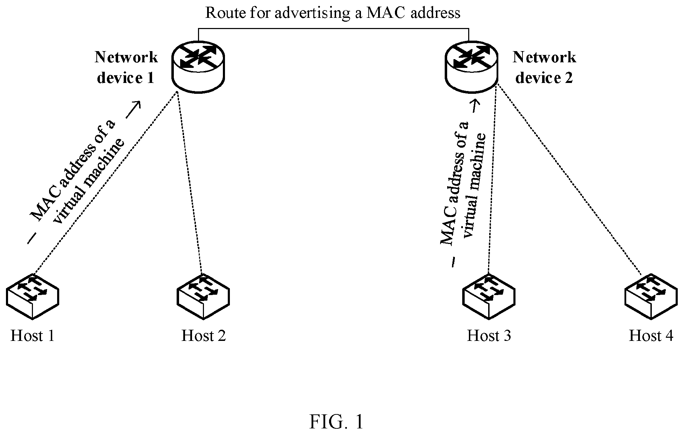

FIG. 1 is a schematic diagram of a network system according to an embodiment of this application. Refer to FIG. 1. A network system, for example, an EVPN-based VXLAN network, an SR network, an SRv6 network, or an MPLS network, usually includes a plurality of network devices (for example, network device 1 and network device 2 shown in FIG. 1) for communicating with each other, to implement a data forwarding function. Hosts (for example, host 1, host 2, host 3, and host 4 shown in FIG. 1) may be connected to a network device in the network system for access to the network system.

Each network device may be connected to a plurality of hosts (which may be referred to as local hosts of the network device), and a plurality of virtual machines (which may be referred to as local virtual machines of the network device) may be created on each of the plurality of hosts. That is, each network device may be connected to a plurality of virtual machines. The plurality of virtual machines connected to the network device may belong to a same VLAN or different VLANs. Each network device may obtain a MAC address of a virtual machine connected to the network device, and send the MAC address to another network device.

Usually, in the VXLAN, each time a network device obtains a MAC address of a virtual machine connected to the network device, the network device generates a MAC/IP Advertisement route for advertising the MAC address of the virtual machine. The MAC/IP Advertisement route includes the MAC address of the virtual machine and a VNI of the virtual machine. Then, the network device sends the MAC/IP Advertisement route to another network device, so that the another network device learns the MAC address of the virtual machine.

However, as virtual machine technologies develop, a large quantity of virtual machines may be created on one host, and different virtual machines may belong to different virtual local area networks and have a same MAC address. In the foregoing MAC address advertisement manner, one MAC/IP Advertisement route needs to be generated for each virtual machine. As a result, a quantity of routes in a network continuously increases, affecting network performance. Therefore, an embodiment of this application provides a MAC address sending method, so that same MAC addresses in different virtual local area networks may be aggregated to one route, to reduce, to some extent, a quantity of routes transmitted in a network, significantly reduce a quantity of routes locally maintained by a network device, and improve overall network operation performance.

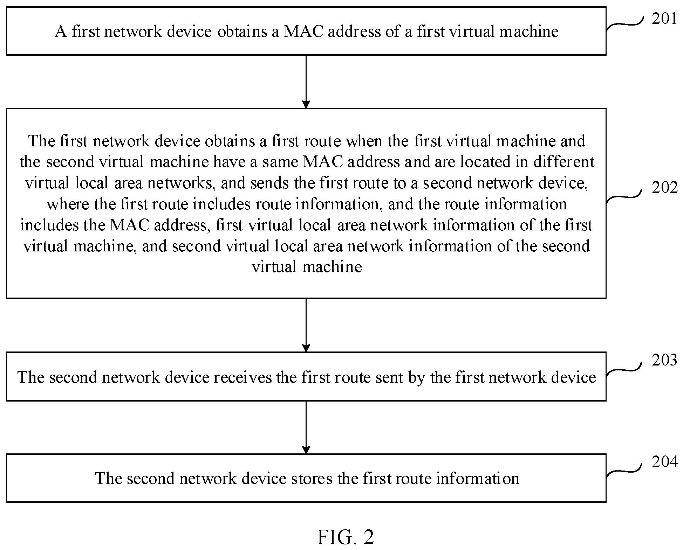

FIG. 2 is a flowchart of a MAC address sending method according to an embodiment of this application. The method is applied to the network system shown in FIG. 1, where the network system includes a first network device and a second network device, the first network device is connected to a plurality of virtual machines, and the plurality of virtual machines include a first virtual machine and a second virtual machine. Refer to FIG. 2, the method includes the following steps.

201: The first network device obtains a MAC address of the first virtual machine.

The first network device may be a device having a data forwarding function, for example, a device such as a switch or a router. In different networks, types of the first network devices may be the same or may be different.

For example, in an EVPN-based VXLAN, the first network device may be a VXLAN tunnel end point (vxlan tunnel end point, VTEP) device or the like. The EVPN is a VPN technology for layer-2 network interconnection.

For another example, in the EVPN-based VXLAN, an SR network, an SRv6 network, or an MPLS network, the first network device may be a PE device. The SRv6 network uses an internet protocol version 6 (Internet Protocol Version 6, IPv6) data plane and may be incrementally deployed in an IPv6 network.

The first network device may be connected to a plurality of hosts (which may be referred to as local hosts of the first network device), and a plurality of virtual machines (which may be referred to as local virtual machines of the first network device) may be created on each of the plurality of hosts. That is, the first network device may be connected to a plurality of virtual machines. The plurality of virtual machines connected to the first network device may belong to a same VLAN or different VLANs.

In addition, the first virtual machine is one of the plurality of virtual machines connected to the first network device, that is, the first virtual machine is a local virtual machine of the first network device. The first network device may obtain the MAC address of the local virtual machine.

Specifically, the first network device may obtain the MAC address of the first virtual machine in a plurality of manners. In a possible manner, in an internet protocol version 4 (Internet Protocol Version 4, IPv4) network, the MAC address of the first virtual machine may be determined by the first network device based on an address resolution protocol (Address Resolution Protocol, ARP) packet received from the first virtual machine, where the ARP packet may include a gratuitous ARP message, an ARP request message, an ARP response message, or the like. In another possible manner, in an IPv6 network, the MAC address of the first virtual machine may be determined by the first network device based on a neighbor discovery protocol (Neighbor Discovery Protocol, NDP) packet received from the first virtual machine, where the NDP packet may include a neighbor solicitation (Neighbor solicitation, NS) message, a neighbor advertisement (Neighbor Advertisement, NA) message, or the like.

For example, in the IPv4 network, after the first virtual machine goes online, the first virtual machine may send a gratuitous ARP message to the first network device connected to the first virtual machine, where the gratuitous ARP message includes the MAC address of the first virtual machine, to advertise the address of the first virtual machine to the first network device. Alternatively, before communicating with another virtual machine, the first virtual machine may send, to the first network device connected to the first virtual machine, an ARP request message carrying an IP address of the another virtual machine, to query a MAC address of the another virtual machine based on the IP address of the another virtual machine. In this case, a source address of the ARP request message is the MAC address of the first virtual machine. Alternatively, when receiving an ARP request message that carries an IP address of the first virtual machine and that is sent by another virtual machine, the first virtual machine may send, to the another virtual machine, an ARP response message carrying the MAC address of the first virtual machine. In this case, a source address of the ARP response message is the MAC address of the first virtual machine. Then, after receiving the gratuitous ARP message, the ARP request message, or the ARP response message sent by the first virtual machine, the first network device may obtain the MAC address of the first virtual machine from the gratuitous ARP message, the ARP request message, or the ARP response message.

For another example, in the IPv6 network, after the first virtual machine goes online, and before the first virtual machine communicates with another virtual machine, the first virtual machine may send, to the first network device connected to the first virtual machine, an NS message carrying an IP address of the another virtual machine, to query a MAC address of the another virtual machine based on the IP address of the another virtual machine. In this case, a source address of the NS message is the MAC address of the first virtual machine. Alternatively, when receiving an NS message that carries an IP address of the first virtual machine and that is sent by another virtual machine, the first virtual machine may send, to the another virtual machine, an NA message carrying the MAC address of the first virtual machine. In this case, a source address of the NA message is the MAC address of the first virtual machine. Then, after receiving the NS message or the NA message sent by the first virtual machine, the first network device may obtain the MAC address of the first virtual machine from the NS message or the NA message.

After obtaining the MAC address of the local first virtual machine of the first network device, the first network device may obtain, by performing the following step 202, a route for advertising the MAC address.

202: The first network device obtains a first route when the first virtual machine and the second virtual machine have a same MAC address and are located in different virtual local area networks, and sends the first route to the second network device. The first route includes route information, and the route information includes the MAC address, first virtual local area network information of the first virtual machine, and second virtual local area network information of the second virtual machine.

The second network device may be a device having a data forwarding function, for example, a device such as a switch or a router. In different networks, types of the second network devices may be the same or may be different. For example, in the EVPN-based VXLAN, the second network device may be a VTEP device or the like. For another example, in the EVPN-based VXLAN, the SR network, the SRv6 network, or the MPLS network, the second network device may be a PE device.

In addition, the second virtual machine is a virtual machine other than the first virtual machine in the plurality of virtual machines connected to the first network device, and the second virtual machine is also a local virtual machine of the first network device.

According to the claimed invention, are one or more virtual machines whose MAC addresses are the same as the MAC address of the first virtual machine, and the one or more virtual machines are located in virtual local area networks different from the virtual local area network in which the first virtual machine is located. The second virtual machine is one of the one or more virtual machines. That is, the route information in the first route includes the MAC address and the first virtual local area network information of the first virtual machine, and may further include one or more pieces of virtual local area network information of the one or more virtual machines whose MAC addresses are the same as the MAC address of the first virtual machine.

According to the claimed invention, for a plurality of virtual machines located in different virtual local area networks that have a same MAC address, one route is used for advertising the MAC address and virtual local area network information of each of the plurality of virtual machines, that is, the same MAC addresses that are in the different virtual local area networks are aggregated to one route. In this way, a quantity of routes in a network may be reduced, and route transmission performance and route convergence performance may be improved.

The first network device may obtain the first route in a plurality of manners. The following describes a plurality of possible cases.

In a first possible case and according to the claimed invention, the first network device obtains the MAC address of the first virtual machine and a MAC address of the second virtual machine within preset duration, and finds that the MAC address of the first virtual machine is the same as the MAC address of the second virtual machine. In this case, the first network device directly generates the first route including the MAC address, the first virtual local area network information of the first virtual machine, and the second virtual local area network information of the second virtual machine, and sends the first route to the second network device. In this way, a quantity of routes that need to be sent may be reduced.

It should be noted that the preset duration may be appropriately set depending on actual requirements, and the preset duration may be set to a small value. For example, the preset duration may be greater than or equal to 0 seconds and less than or equal to 600 seconds. In other words, the first network device obtains both the MAC address of the first virtual machine and the MAC address of the second virtual machine within a short period of time.

For example, in a scenario of going online of virtual machines in batches, if the first virtual machine and the second virtual machine go online at the same time or at a short time interval, the first network device obtains the MAC address of the first virtual machine and the MAC address of the second virtual machine at the same time; or the first network device first obtains the MAC address of the first virtual machine, and then obtains the MAC address of the second virtual machine after a short time interval; or the first network device first obtains the MAC address of the second virtual machine, and then obtains the MAC address of the first virtual machine after a short time interval.

For another example, when a function of aggregating and advertising attribute information of virtual machines having a same MAC address is enabled for the first time, the first network device may have learned information about a plurality of local virtual machines having the same MAC address before enabling the function. However, the information about these virtual machines is respectively stored in a plurality of routes. In this case, the first route may be generated and sent by enabling the aggregation and advertisement function.

In a second possible case, the first network device first obtains the MAC address of the second virtual machine, and then obtains, after preset duration elapses, the MAC address of the first virtual machine. The "after preset duration elapses" is different from that in the foregoing first case. To be specific, after obtaining the MAC address of the second virtual machine, the first network device does not obtain a MAC address of another virtual machine (for example, the first virtual machine) having the same MAC address within the specified preset duration in the first case, but the first network device may send a third route to the second network device after obtaining the MAC address of the second virtual machine. The third route includes the MAC address and the second virtual local area network information, but does not include the first virtual local area network information because the first virtual machine has not been found yet. When the first network device subsequently obtains the MAC address of the first virtual machine, if the first network device finds that the MAC address of the first virtual machine is the same as the MAC address of the second virtual machine, the first network device may send an updated first route. Compared with the third route, the updated first route may carry the MAC address, the virtual local area network information of the first virtual machine, and the virtual local area network information of the second virtual machine. In another case, the updated first route may alternatively include the MAC address and the virtual local area network information of the first virtual machine, but does not include the virtual local area network information of the second virtual machine. For example, when the first virtual machine goes online, the second virtual machine has been offloaded from the first network device or has migrated to another network device. The virtual machine information that is carried in the first route and that is sent by the first network device may be virtual local area network information of one or more virtual machines that are actually mounted to the first network device and that have the same MAC address when the device sends the route, where sending of the first route by the first network device is triggered by going online of the first virtual machine. In addition to the second virtual local area network information of the second virtual machine, the third route may further include virtual local area network information of another virtual machine that has the same MAC address and that is found within the preset duration.

For example, in a scenario of going online of virtual machines, if a plurality of virtual machines go online at the same time or at a short time interval, the first network device may obtain MAC addresses of the plurality of virtual machines within a short period of time. Assuming that the MAC addresses of the plurality of virtual machines are the same, the first network device may generate a third route including the MAC address and virtual local area network information of the plurality of virtual machines, and send the third route to the second network device. After a long period of time that exceeds the preset duration, the first virtual machine goes online, and the first network device obtains the MAC address of the first virtual machine. Assuming that the MAC address of the first virtual machine is the same as the MAC addresses of the plurality of virtual machines, the first network device may add the first virtual local area network information of the first virtual machine, to obtain an updated first route.

The first network device may locally store a correspondence between the MAC address and the virtual local area network information of the one or more virtual machines having the MAC address, and the correspondence may be stored in a local route as route information. For example, corresponding to the first route sent to the second network device, the first network device may locally store a second route, where the second route includes route information that is the same as that of the first route, and the route information includes the MAC address, the first virtual local area network information of the first virtual machine, and the second virtual local area network information of the second virtual machine.

In this embodiment of this application, for the plurality of virtual machines located in the different virtual local area networks that have the same MAC address, only one route needs to be stored, to record the MAC addresses of the plurality of virtual machines and the virtual local area network information of the plurality of virtual machines. That is, for the plurality of virtual machines located in the different virtual local area networks that have the same MAC address, a plurality of route table entries corresponding to the plurality of virtual machines may be recorded in one route, to reduce a quantity of routes that need to be stored.

It should be noted that, if the first route is directly generated by the first network device, the first network device has not stored the second route before obtaining the first route. In this case, after generating the first route, the first network device may generate and store the second route.

If the first route is obtained by the first network device by updating the third route, before obtaining the first route, the first network device has already stored a route including the MAC address and the second virtual local area network information of the second virtual machine. In this case, the first network device may update the stored route, to obtain the second route. Specifically, the first network device may add the first virtual local area network information to the stored route, to obtain the updated second route.

The following describes virtual local area network information.

The virtual local area network information reflects related information of a virtual local area network in which a virtual machine is located, and may be specifically attribute information of one or more virtual local area networks corresponding to the virtual machine. In different networks, attributes included in the virtual local area network information may be the same or may be different. The virtual local area network information may be designed depending on specific requirements, provided that the virtual local area network information can reflect the related information of the virtual local area network in which the virtual machine is located, and that the related information of the virtual local area network can be used to distinguish between different virtual machines.

Optionally, the virtual local area network information may include a virtual private network tag (VPN tag) for identifying a VPN in which the virtual machine is located.

For example, if the first network device is located in the EVPN-based VXLAN, the virtual private network tag may include a VNI. Alternatively, if the first network device is located in the SR network or the SRv6 network, the virtual private network tag may include an SID. Alternatively, if the first network device is located in the MPLS network, the virtual private network tag may include an MPLS label.

Optionally, the virtual local area network information may further include any one or more of: a route target (Route Target) attribute, a virtual local area network tag (VLAN tag), and an MMEC attribute. For the first virtual local area network information of the first virtual machine and the second virtual local area network information of the second virtual machine that are included in the first route, for example, both the first virtual local area network information and the second virtual local area network information may include the virtual private network tag, the Route Target attribute, the VLAN tag, and the MMEC attribute; or both the first virtual local area network information and the second virtual local area network information may include the virtual private network tag, the Route Target attribute, and the MMEC attribute; or both the first virtual local area network information and the second virtual local area network information may include the virtual private network tag and the Route Target attribute.

It should be noted that the Route Target attribute may be for controlling route advertising and receiving. Specifically, in a case in which virtual local area network information included in a route carries the Route Target attribute, another network device that receives the route may compare a Route Target attribute configured by the another network device with the Route target attribute in the route, and store route information in the route only when the two Route Target attributes have a same attribute value; otherwise, the another network device does not store the route information in the route.

In addition, the VLAN tag may identify a VLAN to which a data frame belongs. Specifically, in a case in which the virtual local area network information included in the route carries the VLAN tag, the another network device that receives the route stores the route information in the route, and the another network device may add the VLAN tag to the data frame when subsequently forwarding the data frame whose destination address is the MAC address, to forward the data frame in the VLAN identified by the VLAN tag.

In addition, the MMEC attribute includes a sequence number, and the sequence number increases as a quantity of times of virtual machine migration increases. Specifically, virtual machine migration means that a virtual machine migrates from a network device accessed by the virtual machine to another network device in a network. After detecting that the virtual machine goes online, the network device to which the virtual machine newly migrates may re-send a route for advertising a MAC address of the virtual machine. A difference between the route and a previously advertised route for advertising the MAC address of the virtual machine is that a sequence number (or a value) in an MMEC attribute included in the route is increased by 1. After receiving the route with a larger sequence number than that of a route currently stored in the another network device, the another network device updates the stored route based on the route.

In the case in which the virtual local area network information includes the MMEC attribute, that the first virtual machine migrates from the first network device to the second network device is used as an example. If an attribute value of the MMEC attribute included in the first virtual local area network information (corresponding to the first virtual machine) stored in the first network device is a first attribute value, the first network device receives a fourth route sent by the second network device. The fourth route is generated when the second network device finds that the first virtual machine goes online, and includes the MAC address and third virtual local area network information of the first virtual machine. An attribute value of the MMEC attribute that is of the first virtual machine and that is included in the third virtual local area network information is a second attribute value. When the first attribute value is less than the second attribute value, the first network device updates the second route. Specifically, the first network device may delete the first virtual local area network information of the first virtual machine from the locally stored second route. In addition, the first network device generates a fifth route based on the fourth route and stores the fifth route, where the fifth route includes the MAC address and the third virtual local area network information. The updated second route and the stored fifth route are two different routes, where the second route includes virtual local area network information of a virtual machine having the MAC address under the first network device, and the fifth route includes virtual local area network information of a virtual machine having the MAC address under the second network device. The second route and the fifth route may be two different BGP routes.

When the first attribute value is less than the second attribute value, it indicates that the third virtual local area network information is new virtual local area network information of the first virtual machine compared with the first virtual local area network information. In this case, the first virtual machine has migrated from the first network device to the second network device. Therefore, the first network device may update a stored route corresponding to the first virtual machine, to be specific, may delete the first virtual local area network information in the second route and store the fifth route.

In the foregoing case, before deleting the first virtual local area network information of the first virtual machine, the first network device may first detect whether the first virtual machine still exists locally. If determining that the first virtual machine does not exist locally, the first network device may perform a deletion operation. Otherwise, the first network device may perform an operation such as reporting an error. In addition, the second route may be updated in a manner such as temporarily shielding the first virtual local area network information through setting, in addition to deleting the first virtual local area network information.

In the foregoing case, the third virtual local area network information needs to include at least the virtual private network tag and the MMEC attribute, and may further include the Route Target attribute and/or the VLAN tag.

The first route may be a route for advertising a MAC address. For example, the first route may be a MAC/IP Advertisement route. The MAC/IP Advertisement route may be carried in a BGP Update packet. In this case, the route information including the MAC address, the first virtual local area network information, and the second virtual local area network information may exist in a part of fields in the MAC/IP Advertisement route. Alternatively, some of the route information may directly exist in a part of fields in the BGP Update packet, and other information exists in the MAC/IP Advertisement route. In another case, the route information may alternatively exist in another type of route. The route and one or more other routes may be carried in a packet and sent together, or the route may be individually sent.

In a first possible manner, the MAC/IP Advertisement route may include an EVPN network layer reachability information (network layer reachability information, NLRI) attribute, and the route information may exist in the EVPN NLRI attribute. For example, fields included in the EVPN NLRI attribute may be shown in the following Table 1.

**Table 1**

| |
|---|
| Route distinguisher (Route Distinguisher, RD) |
| Ethernet segment identifier (Ethernet Segment Identifier, ESI) |
| Ethernet tag identity document (Ethernet Tag Identity document, ETID) |
| MAC address length (MAC Address Length) |
| MAC address (MAC Address) |
| IP address length (IP Address Length) |
| IP address (IP Address) |
| Virtual private network tag 1 |
| Route Target 1 |
| VLAN tag 1 |
| MMEC 1 |
| Virtual private network tag 2 |
| Route Target 2 |
| VLAN tag 2 |
| MMEC 2 |
| ··· |
| ··· |
| Virtual private network tag n |
| Route Target n |
| VLAN tag n |
| MMEC n |

The route distinguisher field is for distinguishing MAC/IP Advertisement routes of different VXLANs, to avoid a MAC/IP Advertisement route conflict. The Ethernet segment identifier field is for uniquely identifying a link between a virtual machine and a network device. The Ethernet tag identity document field is for identifying a VLAN ID actually configured for a network device. The MAC address length field is for indicating a length of the MAC address field, and a MAC address may be determined with reference to the MAC address length field and the MAC address field.

The IP address length field is for indicating a length of the IP address field. In embodiments of this application, values of both the IP address length field and the IP address field may be 0.

It can be seen from Table 1 that, the EVPN NLRI attribute in the MAC/IP Advertisement route may include one MAC address and a plurality of pieces of virtual local area network information (namely, the virtual private network tag, the Route Target attribute, the VLAN tag, and the MMEC attribute), and the plurality of pieces of virtual local area network information are virtual local area network information of a plurality of virtual machines to which the MAC address belongs. In this way, one MAC/IP Advertisement route carries the virtual local area network information and the MAC address of the plurality of virtual machines that are located in different virtual local area networks and that have the same MAC address.

It should be noted that in embodiments of this application, Table 1 is used only as an example to describe the EVPN NLRI attribute, and Table 1 constitutes no unique limitation on embodiments of this application. For example, the MAC/IP Advertisement route may actually carry any quantity of pieces of virtual local area network information, and an attribute field included in each piece of virtual local area network information may alternatively be determined depending on requirements.

In a second possible manner, the Route Target attribute in the route information may exist in an extended community (extended communities) attribute in a BGP Update packet, and information other than the Route Target attribute in the route information may exist in an EVPN NLRI attribute. For example, fields included in the BGP Update packet may be shown in the following Table 2.

**Table 2**

| Route Target 1, Route Target 2, ..., Route Target n | Extended communities |
|---|---|
| Route distinguisher (Route Distinguisher, RD) | NLRI |
| Ethernet segment identifier (Ethernet Segment Identifier, ESI) | |
| Ethernet tag identity document (Ethernet Tag Identity document, ETID) | |
| MAC address length (MAC Address Length) | |
| MAC address (MAC Address) | |
| IP address length (IP Address Length) | |
| IP address (IP Address) | |
| Virtual private network tag 1 | |
| VLAN tag 1 | |
| MMEC 1 | |
| Virtual private network tag 2 | |
| Route Target 2 | |
| MMEC 2 | |
| ··· | |
| ··· | |
| Virtual private network tag n | |
| VLAN tag n | |
| MMEC n | |

It can be seen from Table 2 that, the BGP Update packet may include one MAC address and a plurality of pieces of virtual local area network information (namely, the virtual private network tag, the Route Target attribute, the VLAN tag, and the MMEC attribute), and the plurality of pieces of virtual local area network information are virtual local area network information of a plurality of virtual machines to which the MAC address belongs. In this way, one BGP Update packet carries the virtual local area network information and the MAC address of the plurality of virtual machines that are located in different virtual local area networks and that have the same MAC address.

It should be noted that in embodiments of this application, Table 2 is used only as an example to describe the BGP Update packet, and Table 2 constitutes no unique limitation on embodiments of this application.

203: The second network device receives the first route sent by the first network device.

The first route includes the foregoing route information which is referred to as first route information herein. In other words, the first route information includes the MAC address, the first virtual local area network information, and the second virtual local area network information. The MAC address is the MAC address of both the first virtual machine and the second virtual machine that are connected to the first network device, the first virtual local area network information is information about the first virtual machine, and the second virtual local area network information is information about the second virtual machine.

Further, after receiving the first route sent by the first network device, the second network device may further perform route reflection, to be specific, may send the first route to a third network device, so that the third network device may perform virtual machine route learning based on the first route. In embodiments of this application, because the quantity of routes that need to be sent by the first network device is reduced, a quantity of routes that need to be reflected by the second network device is reduced accordingly, thereby further reducing the quantity of routes in the network.

204: The second network device stores the first route information.

It should be noted that, after the first network device sends the first route, the second network device that receives the first route may perform virtual machine route learning based on the first route, in other words, may store the first route information in the first route.

Specifically, the second network device may store the first route information in a local route. The local route includes the MAC address advertised by the first network device by using the first route, the first virtual local area network information of the first virtual machine having the MAC address, and the second virtual local area network information of the second virtual machine having the MAC address.

In a possible case, if the second network device has not stored a route including the MAC address when receiving the first route, the second network device may generate and store a local route including the first route information when receiving the first route.

In another possible case, before receiving the first route, the second network device has received the third route sent by the first network device, where the third route includes second route information, and the second route information includes the MAC address and the second virtual local area network information, but does not include the first virtual local area network information. In this case, the second network device adds the second route information to the second route. Then, when receiving the first route, if the second network device finds that the local route that includes the MAC address and that is advertised by the first network device has been stored locally, the second network device may update the local route based on the received first route. In this case, the second network device updates the second route information in the local route as the first route information. Specifically, for example, the second route information may be completely replaced with the first route information. Alternatively, a different part in the second route information may be partially updated through comparison between the first route information and the second route information, for example, the first virtual local area network information is added to the local route, to implement updating.

In this way, in a same network device, for a plurality of virtual machines located in different virtual local area networks that have a same MAC address, only one route needs to be stored, to record the MAC addresses of the plurality of virtual machines and virtual local area network information of the plurality of virtual machines, so that the quantity of routes that need to be stored may be reduced.

If the attribute value of the MMEC attribute that is of the first virtual machine and that is included in the first route information is the first attribute value, the second network device may generate the fourth route based on a connection between the first virtual machine and the second network device, and send the fourth route to the first network device, where the fourth route includes the MAC address and the third virtual local area network information of the first virtual machine. The attribute value of the MMEC attribute that is of the first virtual machine and that is included in the third virtual local area network information is the second attribute value, the second attribute value is determined based on the first attribute value, and the second attribute value may be greater than the first attribute value, to indicate that the first virtual machine performs migration.

It should be noted that, when the first virtual machine is connected to the second network device, it indicates that the first virtual machine migrates from the first network device to the second network device. Therefore, the second network device may update the attribute value of the MMEC attribute corresponding to the first virtual machine, to be specific, may increase the attribute value of the MMEC attribute of the first virtual machine, in other words, the second attribute value is greater than the first attribute value. After increasing the attribute value of the MMEC attribute of the first virtual machine, the second network device may advertise the MAC address of the first virtual machine and the third virtual local area network information including the second attribute value, where the third virtual local area network information may be carried in the fourth route sent by the second network device to the first network device.

The second network device may further locally store a sixth route including the third virtual local area network information. In a case, before the first virtual machine goes online under the second network device, the second network device has already found that one or more other virtual machines having the same MAC address as that of the first virtual machine go online, and stores virtual local area network information of the one or more other virtual machines in the sixth route. In this case, when finding that the first virtual machine goes online, the second network device may update the sixth route by adding the third virtual local area network information. In another case, before the first virtual machine goes online under the second network device, another virtual machine having the MAC address of the first virtual machine is not loaded on the second network device. In this case, when the first virtual machine goes online, the second network device locally generates and stores the sixth route. In still another case, when the third virtual local area network information is added to the sixth route, virtual local area network information of one or more other virtual machines may be deleted, where the one or more other virtual machines may be, for example, virtual machines that are offloaded within preset duration after the first virtual machine goes online.

In embodiments of this application, the first network device obtains the MAC address of the first virtual machine. Then, the first network device obtains the first route when the first virtual machine and the second virtual machine have a same MAC address and are located in different virtual local area networks, where the first route includes the route information, and the route information includes the MAC address, the first virtual local area network information of the first virtual machine, and the second virtual local area network information of the second virtual machine. Finally, the first network device sends the first route to the second network device, so that the second network device may store the route information. In this way, for the plurality of virtual machines located in the different virtual local area networks that have the same MAC address, one route may be used for advertising the MAC address and the virtual local area network information of each of the plurality of virtual machines, that is, the same MAC addresses that are located in the different virtual local area networks may be aggregated to one route, so that the quantity of routes in the network may be reduced, and the route transmission performance and the route convergence performance may be improved.

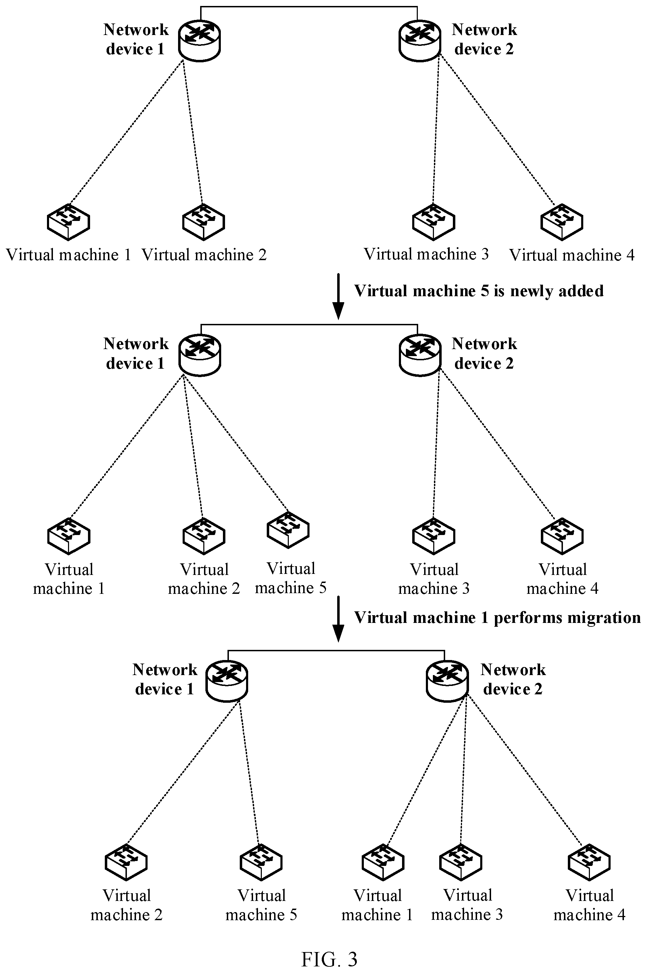

For ease of understanding, the following describes the foregoing MAC address sending method by using an example with reference to a network system and application scenarios at different stages shown in FIG. 3.

### Scenario 1: virtual machine going online

Virtual machine 1 and virtual machine 2 go online under network device 1 at the same time. When obtaining a MAC address of virtual machine 1 and a MAC address of virtual machine 2, network device 1 finds that the MAC address of virtual machine 1 is the same as the MAC address of virtual machine 2 and a virtual local area network in which virtual machine 1 is located is different from a virtual local area network in which virtual machine 2 is located. Therefore, network device 1 generates a route for advertising the MAC address, where the route includes route information, and the route information includes the MAC address, virtual local area network information of virtual machine 1, and virtual local area network information of virtual machine 2. Network device 1 sends the route to network device 2, and stores a local route including the route information.

After receiving the route sent by network device 1, network device 2 may perform an operation such as route reflection, to send the route to another network device. In addition, network device 2 may store a local route including the route information that is in the route, where the local route corresponds to network device 1.

### Scenario 2: virtual machine addition

After network device 1 sends the route to network device 2, virtual machine 5 goes online under network device 1. When obtaining a MAC address of virtual machine 5, network device 1 finds that the MAC address of virtual machine 5 is the same as both the MAC address of virtual machine 1 and the MAC address of virtual machine 2, and then network device 1 updates the route, where route information in an updated route includes the MAC address, the virtual local area network information of virtual machine 1, the virtual local area network information of virtual machine 2, and virtual local area network information of virtual machine 5. Network device 1 sends the updated route to network device 2, and adds the virtual local area network information of virtual machine 5 to the previously stored local route. After receiving the updated route sent by network device 1, network device 2 may perform route reflection, to be specific, may send the updated route to the another network device. In addition, network device 2 may add the virtual local area network information of virtual machine 5 to the previously stored local route.

### Scenario 3: virtual machine migration

Virtual machine 1 migrates from network device 1 to network device 2. After virtual machine 1 goes offline under network device 1 and goes online again under network device 2, network device 2 obtains the MAC address of virtual machine 1 and the virtual local area network information of virtual machine 1. Network device 2 finds that the previously stored local route includes the MAC address and the virtual local area network information of virtual machine 1 that are advertised by the first network device. In this case, network device 2 deletes the virtual local area network information of virtual machine 1 stored in the local route, and increases an attribute value of an MMEC attribute in the obtained virtual local area network information of virtual machine 1. Then, network device 2 generates a new local route including the MAC address and the virtual local area network information of virtual machine 1, where the newly generated local route corresponds to network device 2. In addition, network device 2 generates a route for advertising the MAC address and sends the route to network device 1, where the route includes the MAC address and the virtual local area network information of virtual machine 1.

After receiving the route sent by network device 2, if network device 1 finds that the MAC address advertised by the route is the same as the MAC address included in the local route, and finds that an attribute value of an MMEC attribute that is of virtual machine 1 and that is included in the route is greater than the attribute value of the MMEC attribute that is of virtual machine 1 and that is stored in the local route (where the route corresponds to network device 1), the network device 1 deletes the virtual local area network information of the virtual machine 1 from the local route, and generates a local route (where the route corresponds to network device 2) including the MAC address and the virtual local area network information of the virtual machine 1 in the route.

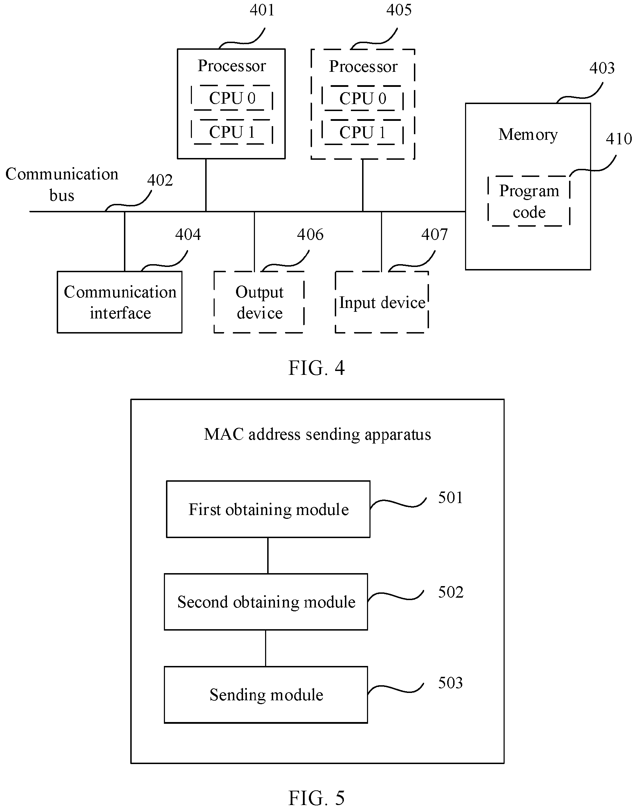

FIG. 4 is a schematic diagram of a structure of a network device according to an embodiment of this application. The network device may be the network device shown in FIG. 1, or may be the first network device in the embodiment in FIG. 2, or may be the second network device in the embodiment in FIG. 2, or may be network device 1 or network device 2 shown in FIG. 3. Refer to FIG. 4. The network device may include at least one processor 401 and at least one communication interface 404. The network device may further include a communication bus 402 and a memory 403. The processor 401 may be a microprocessor (including a central processing unit (central processing unit, CPU) or the like), an application-specific integrated circuit (application-specific integrated circuit, ASIC), or one or more integrated circuits configured to control program execution of the solutions of this application.

The communication interface 404 uses any apparatus such as a transceiver to communicate with another device or communication network, such as the Ethernet, a radio access network (radio access network, RAN), or a wireless local area network (wireless local area network, WLAN).

The memory 403 may be a read-only memory (read-only memory, ROM), a random access memory (random access memory, RAM), an electrically erasable programmable read-only memory (electrically erasable programmable read-Only memory, EEPROM), an optical disc (including a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be used to carry or store expected program code in a form of an instruction or a data structure and that can be accessed by a computer, but is not limited thereto. The memory 403 may exist independently, and is connected to the processor 401 through the communication bus 402. Alternatively, the memory 403 may be integrated with the processor 401.

The communication bus 402 may include a path, to transmit information between the foregoing components.

During specific implementation, in an embodiment, the processor 401 may include one or more CPUs, for example, a CPU 0 and a CPU 1 shown in FIG. 4.

During specific implementation, in an embodiment, the network device may include a plurality of processors, for example, the processor 401 and a processor 405 shown in FIG. 4. Each of these processors may be a single-core processor, or may be a multi-core processor. The processor herein may refer to one or more devices, circuits, and/or processing cores configured to process data (for example, computer program instructions).

During specific implementation, in an embodiment, the network device may further include an output device 406 and an input device 407. The output device 406 communicates with the processor 401, and may display information in a plurality of manners. For example, the output device 406 may be a liquid crystal display (liquid crystal display, LCD), a light emitting diode (light emitting diode, LED) display device, a cathode ray tube (cathode ray tube, CRT) display device, a projector (projector), or the like. The input device 407 communicates with the processor 401, and may receive an input of a user in a plurality of manners. For example, the input device 407 may be a mouse, a keyboard, a touchscreen device, a sensing device, or the like.

The network device may be, for example, a router, a PE device, a network server, a switch, or a desktop computer, or may be another type of communication device or embedded device. A type of the network device is not particularly limited in embodiments of this application.

When the network device includes the memory 403, the memory 403 is configured to store program code 410 for executing the solutions of this application, and the processor 401 is configured to execute the program code 410 stored in the memory 403. The network device may implement, by using the processor 401 and the program code 410 in the memory 403, the operation performed by the first network device or the second network device in the MAC address sending method provided in the embodiment of FIG. 2. In another implementation, a memory may alternatively exist independent of the network device. When the network device runs, program code stored in the memory may be invoked, to implement the operation performed by the first network device or the second network device in the MAC address sending method shown in FIG. 2.

FIG. 5 is a schematic diagram of a structure of a MAC address sending apparatus according to an embodiment of this application. The apparatus may be implemented as a part or all of a network device by using software, hardware, or a combination thereof. The network device may be the network device shown in FIG. 4. Refer to FIG. 5. The apparatus may be located in the first network device shown in FIG. 2 or network device 1 shown in FIG. 3, where the first network device is connected to a plurality of virtual machines, and the plurality of virtual machines include a first virtual machine and a second virtual machine. The apparatus includes a first obtaining module 501, a second obtaining module 502, and a sending module 503.

The first obtaining module 501 is configured to obtain a MAC address of the first virtual machine.

The second obtaining module 502 is configured to obtain a first route when the first virtual machine and the second virtual machine have a same MAC address and are located in different virtual local area networks, where the first route includes route information, and the route information includes the MAC address, first virtual local area network information of the first virtual machine, and second virtual local area network information of the second virtual machine.

The sending module 503 is configured to send the first route to a second network device.

Optionally, the apparatus further includes a first storage module.

The first storage module is configured to store a second route, where the second route includes the route information. Optionally, the sending module 503 is further configured to:
send a third route to the second network device, where the third route includes the MAC address and the second virtual local area network information, but does not include the first virtual local area network information. The second obtaining module 502 is configured to:
update the third route, to obtain the first route.

Optionally, the first virtual local area network information includes a virtual private network tag.

Optionally, if the first network device is located in an EVPN-based VXLAN, the virtual private network tag includes a VNI.

Alternatively, if the first network device is located in an SR network or an SRv6 network, the virtual private network tag includes an SID.

Alternatively, if the first network device is located in an MPLS network, the virtual private network tag includes an MPLS label.

Optionally, the first virtual local area network information further includes any one or more of a route target attribute, a virtual local area network tag, and a MAC mobility extended community attribute.

Optionally, an attribute value of the MAC mobility extended community attribute included in the first virtual local area network information is a first attribute value. The apparatus further includes a receiving module, an updating module, and a second storage module.

The receiving module is configured to receive a fourth route, where the fourth route includes the MAC address and third virtual local area network information of the first virtual machine, and an attribute value of a MAC mobility extended community attribute that is of the first virtual machine and that is included in the third virtual local area network information is a second attribute value.

The updating module is configured to: when the first attribute value is less than the second attribute value, delete the first virtual local area network information in the second route.

The second storage module is further configured to store a fifth route, where the fifth route includes the MAC address and the third virtual local area network information.

Optionally, the first route is a MAC/IP Advertisement route.

In embodiments of this application, the first network device obtains the MAC address of the first virtual machine. Then, the first network device obtains the first route when the first virtual machine and the second virtual machine have a same MAC address and are located in different virtual local area networks, where the first route includes the route information, and the route information includes the MAC address, the first virtual local area network information of the first virtual machine, and the second virtual local area network information of the second virtual machine. Finally, the first network device sends the first route to the second network device, so that the second network device may store the route information. In this way, for a plurality of virtual machines located in different virtual local area networks that have a same MAC address, one route may be used for advertising the MAC address and virtual local area network information of each of the plurality of virtual machines, that is, the same MAC addresses that are located in the different virtual local area networks may be aggregated to one route, so that a quantity of routes in a network may be reduced, and route transmission performance and route convergence performance may be improved.

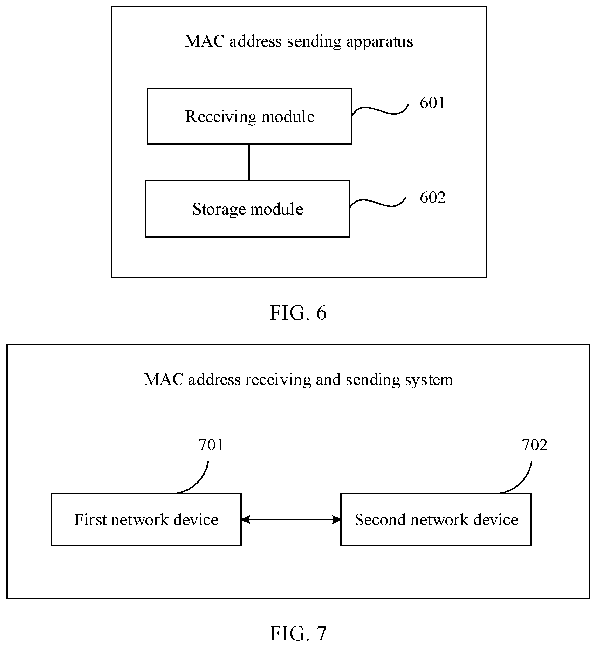

FIG. 6 is a schematic diagram of a structure of a MAC address sending apparatus according to an embodiment of this application. The apparatus may be implemented as a part or all of a network device by using software, hardware, or a combination thereof. The network device may be the network device shown in FIG. 4. Refer to FIG. 6. The apparatus may be located in the second network device shown in FIG. 2 or network device 2 shown in FIG. 3. Both the second network device and a first network device are located in a network system, the first network device is connected to a plurality of virtual machines, and the plurality of virtual machines include a first virtual machine and a second virtual machine. The apparatus includes a receiving module 601 and a storage module 602.

The receiving module 601 is configured to receive a first route sent by the first network device, where the first route includes first route information, the first route information includes a MAC address, first virtual local area network information, and second virtual local area network information, the MAC address is a MAC address of both the first virtual machine and the second virtual machine that are connected to the first network device, the first virtual local area network information is information about the first virtual machine, and the second virtual local area network information is information about the second virtual machine.

The storage module 602 is configured to store the first route information.

Optionally, the storage module 602 is configured to:
store the first route information in a second route.

Optionally, the apparatus further includes an adding module.

The receiving module 601 is further configured to: before receiving the first route, receive a third route sent by the first network device, where the third route includes second route information, the second route information includes the MAC address and the second virtual local area network information, but does not include the first virtual local area network information. The adding module is configured to add the second route information to the second route. The storage module 602 is configured to:
update, for the second network device, the second route information in the second route as the first route information.

Optionally, the first virtual local area network information includes a virtual private network tag.

Optionally, if the first network device is located in an EVPN-based VXLAN, the virtual private network tag includes a VNI.

Alternatively, if the first network device is located in an SR network or an SRv6 network, the virtual private network tag includes an SID.

Alternatively, if the first network device is located in an MPLS network, the virtual private network tag includes an MPLS label.

Optionally, the first virtual local area network information further includes any one or more of a route target attribute, a virtual local area network tag, and a MAC mobility extended community attribute.

Optionally, an attribute value of the MAC mobility extended community attribute that is of the first virtual machine and that is included in the first route information is a first attribute value. The apparatus further includes a sending module.

The sending module is configured to send a fourth route to the first network device based on a connection between the first virtual machine and the second network device, where the fourth route includes the MAC address and third virtual local area network information of the first virtual machine, an attribute value of an MMEC attribute that is of the first virtual machine and that is included in the third virtual local area network information is a second attribute value, and the second attribute value is greater than the first attribute value.

Optionally, the apparatus further includes a sending module.

The sending module is configured to send the first route to a third network device.

Optionally, the first route is a MAC/IP Advertisement route.

In embodiments of this application, the second network device receives the first route sent by the first network device, where the first route includes the first route information, the first route information includes the MAC address, the first virtual local area network information, and the second virtual local area network information, the MAC address is the MAC address of both the first virtual machine and the second virtual machine that are connected to the first network device, the first virtual local area network information is the information about the first virtual machine, and the second virtual local area network information is the information about the second virtual machine. Then, the second network device stores the first route information. In this way, for a plurality of virtual machines located in different virtual local area networks that have a same MAC address, one route may be used for advertising the MAC address and virtual local area network information of each of the plurality of virtual machines, that is, the same MAC addresses that are located in the different virtual local area networks may be aggregated to one route, so that a quantity of routes in a network may be reduced, and route transmission performance and route convergence performance may be improved.

It should be noted that, when the MAC address sending apparatus provided in the foregoing embodiments sends a MAC address, division of the foregoing function modules is merely used as an example for description. During actual application, the foregoing functions may be allocated to different function modules for implementation depending on requirements, that is, an internal structure of the apparatus is divided into different function modules, to implement all or a part of the functions described above. In addition, the MAC address sending apparatus provided in the foregoing embodiments and the MAC address sending method embodiment share a same concept. For a specific implementation process thereof, refer to the method embodiment, and details are not described herein again.

FIG. 7 is a schematic diagram of a MAC address receiving and sending system according to an embodiment of this application. Refer to FIG. 7. The system includes a first network device 701 and a second network device 702. The first network device 701 is connected to a plurality of virtual machines, and the plurality of virtual machines include a first virtual machine and a second virtual machine.

The first network device 701 is configured to: obtain a MAC address of the first virtual machine; obtain a first route when the first virtual machine and the second virtual machine have a same MAC address and are located in different virtual local area networks, where the first route includes first route information, and the first route information includes the MAC address, first virtual local area network information of the first virtual machine, and second virtual local area network information of the second virtual machine; and send the first route to the second network device 702.

The second network device 702 is configured to: receive the first route sent by the first network device 701; and store the first route information in the first route.

Optionally, the first network device 701 is further configured to store a second route, where the second route includes the first route information.

Optionally, the second network device 702 is configured to store the first route information in a sixth route.

Optionally, the first network device 701 is further configured to send a third route to the second network device 702, where the third route includes second route information, the second route information includes the MAC address and the second virtual local area network information, but does not include the first virtual local area network information. In this manner, the first network device 701 is configured to update the third route, to obtain the first route.

The second network device 702 is further configured to: receive the third route sent by the first network device 701; and add the second route information to the sixth route. In this manner, the second network device 702 is configured to update the second route information in the sixth route as the first route information.

Optionally, the first virtual local area network information includes a virtual private network tag. For example, if the first network device 701 is located in an EVPN-based VXLAN, the virtual private network tag includes a VNI. Alternatively, if the first network device 701 is located in an SR network or an SRv6 network, the virtual private network tag includes an SID. Alternatively, if the first network device 701 is located in an MPLS network, the virtual private network tag includes an MPLS label.

Optionally, the first virtual local area network information further includes any one or more of a route target attribute, a virtual local area network tag, and a MAC mobility extended community attribute.

Optionally, the first route is a MAC/IP Advertisement route.

Optionally, an attribute value of the MAC mobility extended community attribute included in the first virtual local area network information is a first attribute value.

The second network device 702 is further configured to: generate a fourth route based on a connection between the first virtual machine and the second network device 702. where the fourth route includes the MAC address and third virtual local area network information of the first virtual machine, an attribute value of a MAC mobility extended community attribute that is of the first virtual machine and that is included in the third virtual local area network information is a second attribute value, and the second attribute value is greater than the first attribute value; and send the fourth route to the first network device 701.

The first network device 701 is further configured to: receive the fourth route; when the first attribute value is less than the second attribute value, delete the first virtual local area network information in the second route; and store a fifth route, where the fifth route includes the MAC address and the third virtual local area network information. Optionally, the second network device 702 is further configured to send the first route to a third network device.

In embodiments of this application, the first network device first obtains the MAC address of the first virtual machine. Then, the first network device obtains the first route when the first virtual machine and the second virtual machine have a same MAC address and are located in different virtual local area networks, where the first route includes the first route information, and the first route information includes the MAC address, the first virtual local area network information of the first virtual machine, and the second virtual local area network information of the second virtual machine. Then, the first network device sends the first route to the second network device, so that the second network device may store the first route information. In this way, for a plurality of virtual machines located in different virtual local area networks that have a same MAC address, the first network device may use one route for advertising the MAC address and virtual local area network information of each of the plurality of virtual machines, that is, information about the plurality of virtual machines that belong to the first network device, that have the same MAC address, but are located in the different virtual local area networks may be aggregated to one route, so that a quantity of routes for advertising a MAC address of a virtual machine in a network may be reduced, and route transmission performance and route convergence performance may be improved.

All or a part of the foregoing embodiments may be implemented by using software, hardware, firmware, or any combination thereof. When embodiments are implemented by using software, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid-state drive (Solid-State Drive, SSD)), or the like.

The foregoing descriptions are merely embodiments of this application, but are not intended to limit this application. The protection scope of this application is defined by the appended claims.

## Claims

1. A media access control, MAC, address sending method, applied to a network system, wherein the network system comprises a first network device (701) and a second network device (702), the first network device (701) is connected to a plurality of virtual machines, the plurality of virtual machines comprise a first virtual machine and a second virtual machine, and the method comprises:
in case the first network device (701) obtains (201) a MAC address of the first virtual machine and a MAC address of the second virtual machine within a preset duration and on finding that the first virtual machine and the second virtual machine have a same MAC address and are located in different virtual local area networks, obtaining (202), by the first network device (701), a first route, wherein the first route comprises route information, and the route information comprises the MAC address, first virtual local area network information of the first virtual machine, and second virtual local area network information of the second virtual machine; and
sending (202), by the first network device (701), the first route to the second network device (702).

2. The method according to claim 1, wherein the method further comprises:
storing, by the first network device (701), a second route, wherein the second route comprises the route information.

3. The method according to claim 1, wherein in case the first network device (701) first obtains the MAC address of the second virtual machine, and then obtains, after the preset duration elapses, the MAC address of the first virtual machine, , a first route, the method further comprises:
sending, by the first network device (701) after obtaining the MAC address of the second virtual machine, a third route to the second network device (702), wherein the third route comprises the MAC address and the second virtual local area network information, but does not comprise the first virtual local area network information; and
updating, by the first network device (701) after obtaining the MAC address of the first virtual machine, the third route, to obtain the first route.

4. The method according to any one of claims 1 to 3, wherein the first virtual local area network information comprises a virtual private network tag.

5. The method according to claim 4, wherein
if the first network device (701) is located in an Ethernet virtual private network, EVPN, based virtual extensible local area network, VXLAN, the virtual private network tag comprises a virtual extensible local area network identifier VNI;
if the first network device (701) is located in a segment routing, SR, network or an internet protocol version 6 segment routing SRv6 network, the virtual private network tag comprises a segment identifier, SID; or
if the first network device (701) is located in a multi-protocol label switching, MPLS, network, the virtual private network tag comprises an MPLS label.

6. The method according to claim 4 or 5, wherein the first virtual local area network information further comprises any one or more of a route target attribute, a virtual local area network tag, and a MAC mobility extended community, MMEC, attribute.

7. The method according to claim 6, wherein an attribute value of the MMEC attribute comprised in the first virtual local area network information is a first attribute value, and the method further comprises:
receiving, by the first network device (701), a fourth route, wherein the fourth route comprises the MAC address and third virtual local area network information of the first virtual machine, and an attribute value of a MAC mobility extended community attribute that is of the first virtual machine and that is comprised in the third virtual local area network information is a second attribute value; and
when the first attribute value is less than the second attribute value, deleting, by the first network device (701), the first virtual local area network information in the second route, and storing a fifth route, wherein the fifth route comprises the MAC address and the third virtual local area network information.

8. The method according to any one of claims 1 to 7, wherein the first route is a media access control/internet protocol advertisement MAC/IP Advertisement route.

9. The method according to any one of claims 1 to 8, wherein the preset duration is greater than or equal to 0 seconds and less than or equal to 600 seconds.

10. The method according to any one of claims 1 to 9, wherein the method further comprises:
receiving (203), by the second network device (702), the first route sent by the first network device (701),; and
storing (204), by the second network device (702), the first route information.

11. The method according to claim 10, wherein the storing (204), by the second network device (702), the first route information comprises:
storing, by the second network device (702), the first route information in a second route.

12. The method according to claim 11, wherein the method further comprises:
receiving, by the second network device (702) before receiving the first route, a third route sent by the first network device (701), wherein the third route comprises second route information, the second route information comprises the MAC address and the second virtual local area network information, but does not comprise the first virtual local area network information; and adding, by the second network device (702), the second route information to the second route; and
the storing (204), by the second network device (702), the first route information in a second route comprises:
updating, by the second network device (702), the second route information in the second route as the first route information.

13. The method according to any one of claims 10 to 12, wherein the first virtual local area network information comprises a virtual private network tag and a MAC mobility extended community attribute, an attribute value of the MAC mobility extended community, MMEC, attribute that is of the first virtual machine and that is comprised in the first route information is a first attribute value, and the method further comprises:
generating, by the second network device (702), a fourth route based on a connection between the first virtual machine and the second network device (702), wherein the fourth route comprises the MAC address and third virtual local area network information of the first virtual machine, an attribute value of a MMES attribute that is of the first virtual machine and that is comprised in the third virtual local area network information is a second attribute value, and the second attribute value is greater than the first attribute value; and
sending, by the second network device (702), the fourth route to the first network device (701).

14. The method according to any one of claims 10 to 13, wherein after the receiving, by the second network device (702), a first route, the method further comprises:
sending, by the second network device (702), the first route to a third network device.

15. A media access control, MAC, address sending apparatus, wherein the MAC address sending apparatus is configured to implement the steps performed by first network device (701) of the method of any one of claims 1 to 9.

16. A MAC address receiving and sending system comprising the MAC address sending apparatus of claim 15 and a MAC address receiving apparatus, wherein the MAC address receiving apparatus is configured to implement the steps performed by the second network device (702) of the method of any one of claims 10 to 14.

17. A computer program product comprising instructions, wherein when the computer program product runs on a computer, the computer is enabled to perform the method according to any one of claims 1 to 14.

## Patentansprüche

1. Media Access Control (MAC)-Adressensendeverfahren, das auf ein Netzwerksystem angewendet wird, wobei das Netzwerksystem eine erste Netzwerkvorrichtung (701) und eine zweite Netzwerkvorrichtung (702) umfasst, die erste Netzwerkvorrichtung (701) mit einer Vielzahl von virtuellen Maschinen verbunden ist, die Vielzahl von virtuellen Maschinen eine erste virtuelle Maschine und eine zweite virtuelle Maschine umfasst und das Verfahren Folgendes umfasst:
falls die erste Netzwerkvorrichtung (701) eine MAC-Adresse der ersten virtuellen Maschine und eine MAC-Adresse der zweiten virtuellen Maschine innerhalb einer voreingestellten Dauer erhält (201) und bei Feststellen, dass die erste virtuelle Maschine und die zweite virtuelle Maschine eine gleiche MAC-Adresse aufweisen und sich in verschiedenen virtuellen lokalen Netzwerken befinden, Erhalten (202) einer ersten Route durch die erste Netzwerkvorrichtung (701), wobei die erste Route Routeninformationen umfasst und die Routeninformationen die MAC-Adresse, erste virtuelle lokale Netzwerkinformationen der ersten virtuellen Maschine und zweite virtuelle lokale Netzwerkinformationen der zweiten virtuellen Maschine umfasst; und
Senden (202) der ersten Route an die zweite Netzwerkvorrichtung (702) durch die erste Netzwerkvorrichtung (701).

2. Verfahren nach Anspruch 1, wobei das Verfahren ferner Folgendes umfasst:
Speichern einer zweiten Route durch die erste Netzwerkvorrichtung (701), wobei die zweite Route die Routeninformationen umfasst.

3. Verfahren nach Anspruch 1, wobei, falls die erste Netzwerkvorrichtung (701) zuerst die MAC-Adresse der zweiten virtuellen Maschine erhält und dann, nach Ablauf der voreingestellten Dauer, die MAC-Adresse der ersten virtuellen Maschine erhält, , einer ersten Route, wobei das Verfahren ferner Folgendes umfasst:
Senden einer dritten Route an die zweite Netzwerkvorrichtung (702) durch die erste Netzwerkvorrichtung (701) nach Erhalten der MAC-Adresse der zweiten virtuellen Maschine, wobei die dritte Route die MAC-Adresse und die zweiten virtuellen lokalen Netzwerkinformationen umfasst, aber nicht die ersten virtuellen lokalen Netzwerkinformationen umfasst; und
Aktualisieren der dritten Route durch die erste Netzwerkvorrichtung (701) nach Erhalten der MAC-Adresse der ersten virtuellen Maschine, um die erste Route zu erhalten.

4. Verfahren nach einem der Ansprüche 1 bis 3, wobei die ersten virtuellen lokalen Netzwerkinformationen ein virtuelles privates Netzwerk-Tag umfassen.

5. Verfahren nach Anspruch 4, wobei
wenn sich die erste Netzwerkvorrichtung (701) in einem Ethernet Virtual Private Network (EVPN)-basierten Virtual Extensible Local Area Network (VXLAN) befindet, das virtuelle private Netzwerk-Tag eine virtuelle erweiterbare lokale Netzwerkkennung (VNI) umfasst; wenn sich die erste Netzwerkvorrichtung (701) in einem Segment Routing (SR)-Netzwerk oder einem Internet Protocol Version 6 Segment Routing (SRv6)-Netzwerk befindet, das virtuelle private Netzwerk-Tag eine Segmentkennung (SID) umfasst; oder
wenn sich die erste Netzwerkvorrichtung (701) in einem Multi-Protocol Label Switching (MPLS)-Netzwerk befindet, das virtuelle private Netzwerk-Tag ein MPLS-Label umfasst.

6. Verfahren nach Anspruch 4 oder 5, wobei die ersten virtuellen lokalen Netzwerkinformationen ferner eines oder mehrere eines Routenzielattributs, eines virtuellen lokalen Netzwerk-Tags und eines MAC Mobility Extended Community (MMEC)-Attributs umfassen.

7. Verfahren nach Anspruch 6, wobei ein Attributwert des MMEC-Attributs, das in den ersten virtuellen lokalen Netzwerkinformationen umfasst ist, ein erster Attributwert ist und das Verfahren ferner Folgendes umfasst:
Empfangen einer vierten Route durch die erste Netzwerkvorrichtung (701), wobei die vierte Route die MAC-Adresse und dritte virtuelle lokale Netzwerkinformationen der ersten virtuellen Maschine umfasst und ein Attributwert eines MAC Mobility Extended Community-Attributs, das zur ersten virtuellen Maschine gehört und das in den dritten virtuellen lokalen Netzwerkinformationen umfasst ist, ein zweiter Attributwert ist; und
wenn der erste Attributwert kleiner als der zweite Attributwert ist, Löschen der ersten virtuellen lokalen Netzwerkinformationen in der zweiten Route durch die erste Netzwerkvorrichtung (701) und Speichern einer fünften Route, wobei die fünfte Route die MAC-Adresse und die dritten virtuellen lokalen Netzwerkinformationen umfasst.

8. Verfahren nach einem der Ansprüche 1 bis 7, wobei die erste Route eine Media Access Control/Internet Protocol Advertisement MAC/IP Advertisement-Route ist.

9. Verfahren nach einem der Ansprüche 1 bis 8, wobei die voreingestellte Dauer größer als oder gleich 0 Sekunden und kleiner als oder gleich 600 Sekunden ist.

10. Verfahren nach einem der Ansprüche 1 bis 9, wobei das Verfahren ferner Folgendes umfasst:
Empfangen (203) der ersten Route, die durch die erste Netzwerkvorrichtung (701) gesendet wurde, durch die zweite Netzwerkvorrichtung (702); und
Speichern (204) der ersten Routeninformationen durch die zweite Netzwerkvorrichtung (702).

11. Verfahren nach Anspruch 10, wobei Speichern (204) der ersten Routeninformationen durch die zweite Netzwerkvorrichtung (702) Folgendes umfasst:
Speichern der ersten Routeninformationen in einer zweiten Route durch die zweite Netzwerkvorrichtung (702).

12. Verfahren nach Anspruch 11, wobei das Verfahren ferner Folgendes umfasst:
Empfangen einer dritten Route, die durch die erste Netzwerkvorrichtung (701) gesendet wurde, durch die zweite Netzwerkvorrichtung (702) vor dem Empfangen der ersten Route, wobei die dritte Route zweite Routeninformationen umfasst, die zweiten Routeninformationen die MAC-Adresse und die zweiten virtuellen lokalen Netzwerkinformationen umfassen, aber nicht die ersten virtuellen lokalen Netzwerkinformationen umfassen; und
Hinzufügen der zweiten Routeninformationen zur zweiten Route durch die zweite Netzwerkvorrichtung (702); und
Speichern (204) der ersten Routeninformationen in einer zweiten Route durch die zweite Netzwerkvorrichtung (702) Folgendes umfasst:
Aktualisieren der zweiten Routeninformationen in der zweiten Route als die ersten Routeninformationen durch die zweite Netzwerkvorrichtung (702).

13. Verfahren nach einem der Ansprüche 10 bis 12, wobei die ersten virtuellen lokalen Netzwerkinformationen ein virtuelles privates Netzwerk-Tag und ein MAC Mobility Extended Community-Attribut umfassen, ein Attributwert des MAC Mobility Extended Community (MMEC)-Attributs, das zur ersten virtuellen Maschine gehört und in den ersten Routeninformationen umfasst ist, ein erster Attributwert ist, und das Verfahren ferner Folgendes umfasst:
Erzeugen einer vierten Route basierend auf einer Verbindung zwischen der ersten virtuellen Maschine und der zweiten Netzwerkvorrichtung (702) durch die zweite Netzwerkvorrichtung (702), wobei die vierte Route die MAC-Adresse und dritte virtuelle lokale Netzwerkinformationen der ersten virtuellen Maschine umfasst, ein Attributwert eines MMES-Attributs, das zur ersten virtuellen Maschine gehört und das in den dritten virtuellen lokalen Netzwerkinformationen umfasst ist, ein zweiter Attributwert ist und der zweite Attributwert größer als der erste Attributwert ist; und
Senden der vierten Route an die erste Netzwerkvorrichtung (701) durch die zweite Netzwerkvorrichtung (702).

14. Verfahren nach einem der Ansprüche 10 bis 13, wobei nach Empfangen einer ersten Route durch die zweite Netzwerkvorrichtung (702) das Verfahren ferner Folgendes umfasst:
Senden der ersten Route an eine dritte Netzwerkvorrichtung durch die zweite Netzwerkvorrichtung (702).

15. Media Access Control (MAC - media access control)-Adressensendeeinrichtung, wobei die MAC-Adressensendeeinrichtung dazu konfiguriert ist, die von der ersten Netzwerkvorrichtung (701) durchgeführten Schritte des Verfahrens nach einem der Ansprüche 1 bis 9 zu implementieren.

16. MAC-Adressenempfangs- und -sendesystem, umfassend die MAC-Adressensendeeinrichtung nach Anspruch 15 und eine MAC-Adressenempfangseinrichtung, wobei die MAC-Adressenempfangseinrichtung dazu konfiguriert ist, die von der zweiten Netzwerkvorrichtung (702) durchgeführten Schritte des Verfahrens nach einem der Ansprüche 10 bis 14 zu implementieren.

17. Computerprogrammprodukt, das Anweisungen umfasst, wobei, wenn das Computerprogrammprodukt auf einem Computer ausgeführt wird, der Computer befähigt wird, das Verfahren nach einem der Ansprüche 1 bis 14 durchzuführen.

## Revendications

1. Procédé d'envoi d'adresse de commande d'accès au support, MAC, appliqué à un système de réseau, dans lequel le système de réseau comprend un premier dispositif réseau (701) et un deuxième dispositif réseau (702), le premier dispositif réseau (701) est connecté à une pluralité de machines virtuelles, la pluralité de machines virtuelles comprennent une première machine virtuelle et une seconde machine virtuelle, et le procédé comprend :
dans le cas où le premier dispositif réseau (701) obtient (201) une adresse MAC de la première machine virtuelle et une adresse MAC de la seconde machine virtuelle dans une durée prédéfinie et lorsqu'il est constaté que la première machine virtuelle et la seconde machine virtuelle ont une même adresse MAC et sont situées dans des réseaux locaux virtuels différents, l'obtention (202), par le premier dispositif réseau (701), d'une première route, dans lequel la première route comprend des informations de route, et les informations de route comprennent l'adresse MAC, des premières informations de réseau local virtuel de la première machine virtuelle et des secondes informations de réseau local virtuel de la seconde machine virtuelle ; et
l'envoi (202), par le premier dispositif réseau (701), de la première route vers le deuxième dispositif réseau (702).

2. Procédé selon la revendication 1, dans lequel le procédé comprend en outre :
le stockage, par le premier dispositif réseau (701), d'une deuxième route, dans lequel la deuxième route comprend les informations de route.

3. Procédé selon la revendication 1, dans lequel, dans le cas où le premier dispositif réseau (701) obtient d'abord l'adresse MAC de la seconde machine virtuelle, puis obtient, après l'écoulement de la durée prédéfinie, l'adresse MAC de la première machine virtuelle, une première route, le procédé comprend en outre :
l'envoi, par le premier dispositif réseau (701) après l'obtention de l'adresse MAC de la seconde machine virtuelle, d'une troisième route vers le deuxième dispositif réseau (702), dans lequel la troisième route comprend l'adresse MAC et les secondes informations de réseau local virtuel, mais ne comprend pas les premières informations de réseau local virtuel ; et
la mise à jour, par le premier dispositif réseau (701) après l'obtention de l'adresse MAC de la première machine virtuelle, de la troisième route, pour obtenir la première route.

4. Procédé selon l'une quelconque des revendications 1 à 3, dans lequel les premières informations de réseau local virtuel comprennent une étiquette de réseau privé virtuel.

5. Procédé selon la revendication 4, dans lequel
si le premier dispositif réseau (701) est situé dans un réseau privé virtuel Ethernet, EVPN, sur la base d'un réseau local extensible virtuel, VXLAN, l'étiquette de réseau privé virtuel comprend un identifiant de réseau local extensible virtuel VNI ; si le premier dispositif réseau (701) est situé dans un réseau de routage de segments, SR, ou un réseau de routage de segments SRv6 (Internet Protocol version 6), l'étiquette de réseau privé virtuel comprend un identifiant de segment, SID ; ou
si le premier dispositif réseau (701) est situé dans un réseau de commutation d'étiquettes multiprotocole, MPLS, l'étiquette de réseau privé virtuel comprend une étiquette MPLS.

6. Procédé selon la revendication 4 ou 5, dans lequel les premières informations de réseau local virtuel comprennent en outre l'un ou plusieurs d'un attribut cible de route, d'une étiquette de réseau local virtuel et d'un attribut de communauté étendue de mobilité MAC, MMEC.

7. Procédé selon la revendication 6, dans lequel une valeur d'attribut de l'attribut MMEC compris dans les premières informations de réseau local virtuel est une première valeur d'attribut, et le procédé comprend en outre :
la réception, par le premier dispositif réseau (701), d'une quatrième route, dans lequel la quatrième route comprend l'adresse MAC et des troisièmes informations de réseau local virtuel de la première machine virtuelle, et une valeur d'attribut d'un attribut de communauté étendue de mobilité MAC qui est de la première machine virtuelle et qui est située dans les troisièmes informations de réseau local virtuel est une seconde valeur d'attribut ; et
lorsque la première valeur d'attribut est inférieure à la seconde valeur d'attribut, la suppression, par le premier dispositif réseau (701), des premières informations de réseau local virtuel dans la deuxième route et le stockage d'une cinquième route, dans lequel la cinquième route comprend l'adresse MAC et les troisièmes informations de réseau local virtuel.

8. Procédé selon l'une quelconque des revendications 1 à 7, dans lequel la première route est une route d'annonce de commande d'accès au support/protocole Internet (MAC/IP Advertisement).

9. Procédé selon l'une quelconque des revendications 1 à 8, dans lequel la durée prédéfinie est supérieure ou égale à 0 seconde et inférieure ou égale à 600 secondes.

10. Procédé selon l'une quelconque des revendications 1 à 9, dans lequel le procédé comprend en outre :
la réception (203), par le deuxième dispositif réseau (702), de la première route envoyée par le premier dispositif réseau (701) ; et
le stockage (204), par le deuxième dispositif réseau (702), des premières informations de route.

11. Procédé selon la revendication 10, dans lequel le stockage (204), par le deuxième dispositif réseau (702), des premières informations de route comprend :
le stockage, par le deuxième dispositif réseau (702), des premières informations de route dans une deuxième route.

12. Procédé selon la revendication 11, dans lequel le procédé comprend en outre :
la réception, par le deuxième dispositif réseau (702), avant la réception de la première route, d'une troisième route envoyée par le premier dispositif réseau (701), dans lequel la troisième route comprend des secondes informations de route, les secondes informations de route comprennent l'adresse MAC et les secondes informations de réseau local virtuel, mais ne comprennent pas les premières informations de réseau local virtuel ; et l'ajout, par le deuxième dispositif réseau (702), des secondes informations de route à la deuxième route ; et
le stockage (204), par le deuxième dispositif réseau (702), des premières informations de route dans une deuxième route comprend : la mise à jour, par le deuxième dispositif réseau (702), des secondes informations de route dans la deuxième route en tant que premières informations de route.

13. Procédé selon l'une quelconque des revendications 10 à 12, dans lequel les premières informations de réseau local virtuel comprennent une étiquette de réseau privé virtuel et un attribut de communauté étendue de mobilité MAC, une valeur d'attribut de l'attribut de communauté étendue de mobilité MAC, MMEC, qui est de la première machine virtuelle et qui est située dans les premières informations de route est une première valeur d'attribut, et le procédé comprend en outre :
la génération, par le deuxième dispositif réseau (702), d'une quatrième route sur la base d'une connexion entre la première machine virtuelle et le deuxième dispositif réseau (702), dans lequel la quatrième route comprend l'adresse MAC et des troisièmes informations de réseau local virtuel de la première machine virtuelle, une valeur d'attribut d'un attribut MMES qui est de la première machine virtuelle et qui est située dans les troisièmes informations de réseau local virtuel est une seconde valeur d'attribut, et la seconde valeur d'attribut est supérieure à la première valeur d'attribut ; et
l'envoi, par le deuxième dispositif réseau (702), de la quatrième route vers le troisième dispositif réseau (701).

14. Procédé selon l'une quelconque des revendications 10 à 13, dans lequel, après la réception, par le deuxième dispositif réseau (702), d'une première route, le procédé comprend en outre :
l'envoi, par le deuxième dispositif réseau (702), de la première route vers un troisième dispositif réseau.

15. Appareil d'envoi d'adresse de commande d'accès au support, MAC, dans lequel l'appareil d'envoi d'adresse MAC est configuré pour mettre en œuvre les étapes réalisées par le premier dispositif réseau (701) du procédé selon l'une quelconque des revendications 1 à 9.

16. Système de réception et d'envoi d'adresse MAC comprenant l'appareil d'envoi d'adresse MAC selon la revendication 15 et un appareil de réception d'adresse MAC, dans lequel l'appareil de réception d'adresse MAC est configuré pour mettre en œuvre les étapes réalisées par le deuxième dispositif réseau (702) du procédé selon l'une quelconque des revendications 10 à 14.

17. Produit de programme informatique comprenant des instructions, dans lequel lorsque le produit de programme informatique fonctionne sur un ordinateur, l'ordinateur est activé pour réaliser le procédé selon l'une quelconque des revendications 1 à 14.
